# NEW EUROPEAN PATENT SPECIFICATION

(11) **EP 3 344 870 B2**
(45) Date of publication and mention of the opposition decision: **14.01.2026**
(45) Mention of the grant of the patent: 21.04.2021
(21) Application number: 16840861.5
(22) Date of filing: 15.08.2016
(51) Int. Cl.: F03D 7/04, F03D 7/02, F03D 9/00, G01M 7/00

(54) **A WIND TURBINE AND A METHOD OF OPERATING A WIND TURBINE WITH A ROTATIONAL SPEED EXCLUSION ZONE**
WINDTURBINE UND VERFAHREN ZUM BETRIEB EINER WINDTURBINE MIT EINEM DREHZAHLAUSSCHLUSSBEREICH
ÉOLIENNE ET PROCÉDÉ DE FONCTIONNEMENT D'ÉOLIENNE AYANT UNE ZONE D'EXCLUSION DE VITESSE DE ROTATION

(30) Priority: 04.09.2015 DK 201570570
(43) Date of publication of application: 11.07.2018
(73) Proprietor: Envision Energy (Denmark) ApS, 8600 Silkeborg (DK)
(72) Inventor: PEDERSEN, Keld Stefan, 7100 Vejle (DK); FRIEDRICH, Michael, 8600 Silkeborg (DK)
(74) Representative: Patrade A/S
(86) International application number: PCT/DK2016/050274
(87) International publication number: WO 2017/036481

(56) References cited:
- EP-A1- 0 244 341
- EP-A1- 2 123 906
- EP-A1- 2 463 517
- EP-A1- 2 620 639
- WO-A1-2007/053031
- WO-A1-2013/097863
- WO-A1-2015/085465
- WO-A1-2015/086024
- WO-A1-2016/004950
- WO-A1-2016/023556
- WO-A2-2010/060772
- DE-C1- 10 016 912
- DK-A1- 201 470 481
- US-A1- 2004 108 729
- US-A1- 2009 110 540
- US-A1- 2009 110 540
- US-A1- 2013 177 418
- US-A1- 2013 177 418
- US-A1- 2013 181 450
- US-A1- 2013 230 396
- US-A1- 2014 003 936
- US-A1- 2014 327 243
- US-B2- 6 891 280
- LICARI JOHN ET AL: "Investigation of a Speed Exclusion Zone to Prevent Tower Resonance in Variable-Speed Wind Turbines", IEEE TRANSACTIONS ON SUSTAINABLE ENERGY, IEEE, USA, vol. 4, no. 4, 1 October 2013 (2013-10-01), pages 977 - 984, XP011527168, ISSN: 1949-3029, [retrieved on 20130916], DOI: 10.1109/TSTE.2013.2257899
- E. Hau, Windkraftanlagen, 3rd edition, 2003, front pages, table of contents,pages 406 - 426
- JOHN LICARI ET AL.: "Investigation of a Speed Exclusion Zone to Prevent Tower Resonance in Variable-Speed Wind Turbines''.", IEEE TRANSACTIONS ON SUSTAINABLE ENERGY, vol. 4, no. 4, October 2013 (2013-10-01), XP011527168

## Description

### Field of the Invention

The present invention relates to a wind turbine and a method of operating a wind turbine with a rotational speed exclusion zone, wherein the wind turbine comprises a control system configured to control the rotational speed of the rotor or generator. The control system monitors the rotational speed and changes the rotational speed to avoid critical rotational speeds located within an exclusion zone.

### Background of the Invention

It is known that the operation of variable speed wind turbines is controlled to maximise the power production while reducing the loads in the wind turbine. A particular concern is the oscillating motions occurring in the wind turbine tower due to resonance which in turn results in increased bending moments and increased fatigue loads. These increased loads reduce the operating time of the wind turbine tower. Vibrations in the drive train may also cause the wind turbine tower to resonate if the frequency of the torsional moment coincides with the eigenfrequency of the wind turbine tower. The rotational frequency of the rotor or the passing frequency of the wind turbine blades may also coincide with the eigenfrequency of the wind turbine tower causing it to resonate.

One way to solve this problem is to increase the structural strength of the wind turbine tower by adding additional material so that the eigenfrequency of the wind turbine tower is located away from the frequency ranges of the rotor and the passing wind turbine blades. However, this increases the weight and costs of the wind turbine tower.

Another solution is to design the wind turbine tower so that the eigenfrequency of the wind turbine tower is located between the frequency ranges of the rotational frequency and the blade passing frequency. However, this solution presents some design challenges, particularly if the wind turbine is intended to be placed on an offshore foundation. The wind turbine tower may be designed so that the eigenfrequency of the wind turbine tower is located below the frequency range of the rotational frequency. However, this presents a structural strength issue and makes the wind turbine tower sensitive to wind and wave movements. Yet another solution is to install damper units in the wind turbine to dampen the movements caused by vibrations. However, this adds to the complexity and total costs of the wind turbine.

It has been proposed by John Licari, et al. to implement an exclusion zone in the rotor speed region of the wind turbine control system to prevent the rotation frequency of the rotor from getting close to the eigenfrequency of the wind turbine tower. It is proposed to use an exclusion zone having a fixed width relative to the eigenfrequency of the wind turbine tower. However, a large exclusion zone will result in a large power loss, while a narrow exclusion zone will result in increased vibrations and fatigue loads.

WO 2015/085465 A1 discloses a wind turbine comprising a control system monitoring operating conditions, wherein a sensor measures an operating parameter or wind parameter. A controller then analyses the measured signal and determines the operating conditions. The controller further detects oscillations with a resonance frequency as variances in the operating conditions and changes the operating set point of a control signal accordingly. The frequency of the operating conditions is thereby moved out of the exclusion zone located around the resonance frequency. The width of the exclusion zone can be determined dynamically by using perturbation tests performed on the collected data, however, further details about the perturbation test and how to analyse the test results in order to determine the width of the exclusion zone are not provided. This automated perturbation test and subsequent analysis further increase the amount of data processing required.

US 2013/0177418 A1 discloses a method of operating a wind turbine, wherein the controller is configured to vary the rotational speed of the rotor within a predetermined operating range. The operating range is defined by a minimum rotational speed and a maximum rotational speed. The controller is connected to a sensor that measures the oscillation of the wind turbine, wherein the controller increases the minimum rotational speed and thus reduces the operating range, if at least the amplitude of the oscillation exceeds a threshold value. It is stated that the resonance oscillations are reduced with this control method.

US 2009/0110540 A1 discloses a method of operating a wind turbine placed on pillars anchored into a permafrost layer and an active layer. Temperature sensors are used to measure the temperature at predetermined depths below the surface level, wherein the controller transforms the measured temperature signals to the frequency domain and determines the natural frequencies of the wind turbine structure. If the controller detects that the operating frequency is within an exclusion zone, then the controller adapts the operation of the wind turbine to move the operating frequency out of the exclusion zone. It is stated that the width of the exclusion zone can be modified, but no further details is disclosed.

Thus, there is a need for an improved control method for preventing resonance in the wind turbine tower and reducing fatigue loads.

### Object of the Invention

An object of the invention is to provide a control method that monitors the vibration level in the wind turbine tower.

An object of the invention is to provide a control method that reduces the power loss and at the same time reduces vibrations in the wind turbine tower.

An object of the invention is to provide a control method that detects the eigenfrequency of the wind turbine tower.

An object of the invention is to provide a wind turbine capable of monitoring the vibration level in the wind turbine tower.

An object of the invention is to provide a wind turbine having a wind turbine control system that minimises the power loss while reducing vibrations in the wind turbine tower.

### Description of the Invention

An object of the invention is achieved by a method of controlling a wind turbine for reducing fatigue loads, the wind turbine comprising a wind turbine tower, a nacelle arranged on top of the wind turbine tower, a rotatable rotor with at least two wind turbine blades arranged relative to the nacelle, and a wind turbine control system, wherein the wind turbine control system comprises a controller configured to control the operation of the wind turbine and a sensor unit configured to measure the rotational speed of the rotor, wherein the method comprises the steps of:
- measuring a vibration signal indicative of vibrations in the wind turbine tower, transforming the vibration signal into the frequency domain via a spectral analysis algorithm, preferably a Fast Fourier Transform algorithm,
- measuring a rotational speed of the wind turbine,
- determining a vibration level of the wind turbine based on the amplitude of the frequency transformed vibration signal and
- comparing the measured rotational speed to at least one exclusion zone determined by a width about a predetermined rotational speed, whereby the at least one exclusion zone defines a first rotational speed and at least a second rotational speed, and when the measured rotational speed is within the at least one exclusion zone performing a step of:
- adjusting the operation of the wind turbine so that the rotational speed is changed to a rotational speed located outside the at least one exclusion zone,
wherein the method further comprises the step of:
- varying the width of the at least one exclusion zone as a variable width as function of the measured vibration signal, and
- applying a transfer function to the vibration level of the measured vibration signal, wherein the transfer function is indicative of at least one transition phase in which the variable width is changed between a first width and a second width.

The terms "varied", "variable" and "varying" mean that the width of this exclusion zone is not fixed, but changed relative to the current level of vibrations. In conventional exclusion algorithms, the width is fixed and thus not changed regardless of the level of vibrations. The conventional exclusion algorithms are not enabled to adapt to the different conditions causing vibrations in the wind turbine tower.

The present control method advantageously minimises the power loss in the wind turbine while preventing excessive vibrations in the wind turbine due to resonance. The present control method is also capable of adapting to the different conditions causing vibrations in the wind turbine. The vibrations may be generated in the wind turbine blades and/or in the drive train and then transferred to the wind turbine tower via their connecting structural elements. The vibrations may be due to an aerodynamic imbalance or a mass imbalance in the rotor. The vibrations may also be due to a yaw error in the wind turbine or a wake or turbulence generated by another wind turbine located upwind relative to the wind turbine. The vibrations may be generated by resonance between the harmonic frequencies of the rotor speed and the eigenfrequency of the wind turbine.

The vibrations are measured along one or more reference axis of the wind turbine, such as in an axial direction parallel to the wind direction and/or in a lateral direction perpendicular to the wind direction. The axial and lateral directions may instead be defined relative to a rotation axis of the rotor/rotation shaft wherein the axial direction is defined by the rotation axis. Preferably, the vibrations are measured in the lateral direction.

The rotational speed is measured, either directly or indirectly, around the rotation axis of the wind turbine. The rotational speed may be measured in the drive train, e.g. on the rotor shaft connected to the rotor or on the rotation shaft connected to the rotor assembly in the generator. Alternatively, the rotation speed may be measured in the plane of the rotor.

The method further comprises the step of applying a transfer function to the vibration signal, wherein the transfer function is indicative of at least one transition phase in which the variable width is changed between a first width and a second width.

The signal from the vibration sensor, e.g. the vibration signal, and the rotational speed sensor, e.g. the rotational speed signal, are transmitted to a controller, e.g. PLC-circuit or a microprocessor, in the wind turbine control system for further processing. The measured signals may be suitable filtered, amplified and/or A/D converted prior to being processed in the controller. The vibrations and rotational speed may be measured within one or more time windows, preferably individual time windows. At least one of the two measured signals being the vibration signal is further transformed into the frequency domain via a Fast Fourier Transform (FFT) algorithm or another suitable spectral analysis algorithm. The amplitude of this frequency transformed signal, e.g. the amplitude at the eigenfrequency of the wind turbine tower, may be used to determine the vibration level of the wind turbine. The controller may further be configured to analyse the frequency transformed signal to detect the eigenfrequency of the wind turbine tower or to calculate the eigenfrequency of the wind turbine tower based on one or more control parameters. This allows the controller to monitor the vibration level and rotational speed when the wind turbine is operated at the resonance rotational speed. The resonance rotational speed is defined as any power production mode or idling mode wherein an overlap between a multiple of the rotational speed and the eigenfrequency of the wind turbine tower may occur. In example, the value of said multiple may be one, two, three, etc.

The controller then applies a transfer function to the vibration level, e.g. the vibration signal, wherein the output signal of this function is used to determine the width of the respective exclusion zone. The transfer function comprises at least one line segment indicative of a first region or transition phase wherein the width is changed from an upper level to a lower level, or vice versa. The first width defines the lower level, and the second width defines the upper level. This allows the width of the exclusion zone to be reduced as the vibration level drops towards zero, and vice versa. The width of each exclusion zone may be defined by any real positive number, i.e. one, two, three, etc., depending on the output signal of the transfer function. This provides a simple and easy way of determining the width of the exclusion zone unlike WO 2015/085465 A1 which uses a perturbation test and a subsequent analysis of the test results in order to determine the width.

When the vibration level is below a first vibration value defined by the first width, the width may remain at the lower level. This allows a minimum width or no exclusion zone to be deployed when only small vibrations are detected. When the vibration level is above a second vibration value defined by the second width, the width may remain at the upper level. This allows a maximum width to be deployed when extreme vibrations are detected.

The transition phase enables the respective exclusion zone to be gradually introduced and thus creates a smooth activation of the exclusion algorithm. This allows the wind turbine to be operated closer to the eigenfrequency of the wind turbine tower and, thus, closer to the optimal operating point for maximum power production. The eigenfrequency of the wind turbine tower may be associated with a corresponding critical rotational speed. This in turn increases the vibrations in the lateral direction, but within a suitable level that does not require additional structural strength in the wind turbine tower.

Conventional control methods use an activation threshold to activate the exclusion algorithm and thus, to some extent, provide a soft introduction of its exclusion zone. However, the exclusion zones used in these conventional control methods will have an unnecessary large width at low vibration levels which leads to a greater power loss. In the present invention, the width of the respective exclusion zone is completely variable and may be adjusted over time. This enables the controller to adjust the width each time the exclusion algorithm is activated or when it is deemed necessary, e.g. when the vibration level changes from one level to another level.

In a preferred embodiment, the width is maintained at the first width at vibrations below the transition phase and maintained at the second width at vibrations above the transition phase.

The transfer function preferably comprises a second line segment and at least a third line segment. The second line segment is indicative of a second region in which the width is maintained at the first width. The third line segment is indicative of a third region in which the width is maintained at the second width. The first width may have a value between zero and ±5%, preferably between zero and ±2,5%, of the critical rotational speed. This allows the rotational speed of the wind turbine to follow the normal operating level at all times. The second width may have a value between ±5% and 15%, preferably between ±7,5% and ±12,5%, of the critical rotational speed. This allows the rotational speed of the wind turbine to be adjusted away from the critical rotational speed to avoid resonance and, thus, large vibrations in the wind turbine.

According to a special embodiment, the transfer function is at least a linear function, a stepped function, a S-function, an exponential function, or a logarithmic function.

The transfer function may be selected based on the desired wind turbine configuration, the installation site and foundation thereof, or another criterion. The transfer function, e.g. the line segment describing the transition phase, may be a linear function, a stepped function, a S-function, an exponential function, or a logarithmic function. The transfer function preferably describes a smooth transition around the first and second widths so that the transfer function describes a continuously smoothed function. This enables the rotational speed of the wind turbine to be smoothly adjusted without introducing unnecessary vibrations and loads in the wind turbine.

According to one embodiment, the step of adjusting the operation of the wind turbine comprises changing a value of at least one control signal, e.g. a torque control signal, relative to a normal operating level, and maintaining the rotational speed at the first or second rotational speed.

The respective exclusion zone divides the normal operating range of the rotational speed into a lower zone and an upper zone. As wind speed increases from the cut-in wind speed, the rotational speed follows the normal operating level in the lower zone. The normal operating level may be determined by the controller as the optimal set-point for the respective control signal for maximum power production. As the wind speed continues to increase, the controller may maintain the rotational speed control signal at the first rotational speed. The controller then adjusts the value of at least one other control signal relative to the normal operating level of that control signal. The other control signal may be selected from the torque control signal, the pitch control signal, the power control signal, or another suitable control signal. Alternatively or additionally, the controller activates a braking system arranged relative to the rotor or rotor shaft to slow down the rotational speed of the wind turbine. This allows the wind turbine to accumulate excess energy before crossing the exclusion zone.

As the wind speed decreases from the cut-out wind speed in the upper zone, the rotational speed follows the normal operating level in this upper zone. As the wind speed continues to decrease, the controller may maintain the rotational speed control signal at the second rotational speed. The controller then adjusts the value of the other control signal relative to its normal operating level. Alternatively or additionally, the controller activates a braking system arranged relative to the rotor or rotor shaft to slow down the rotational speed of the wind turbine. This allows the wind turbine to reduce the amount of generated energy before crossing the exclusion zone.

According to one embodiment, the step of adjusting the operation of the wind turbine comprises changing the value of at least one control signal, e.g. a torque control signal, relative to a normal operating level, when the measured rotational speed is between a third rotational speed and the first or second rotational speed.

This configuration differs from the configuration described above by monitoring the increasing rotational speed in the controller to detect when it passes a third rotational speed prior to reaching the first rotational speed. Once the rotational speed passes the third rotational speed, the controller adjusts the rotational speed control signal and the value of the other control signal relative to their normal operating levels. This allows the wind turbine to accumulate excess energy within a pre-zone located adjacent to that respective exclusion zone.

The controller in this configuration further monitors the decreasing rotational speed to detect when it passes a fourth rotational speed prior to reaching the second rotational speed. The controller then adjusts the rotational speed control signal and the value of the other control signal relative to their normal operating levels. Alternatively, or additionally, the controller activates a braking system arranged relative to the rotor or rotor shaft in order to slow down the rotational speed of the wind turbine. This allows the wind turbine to reduce the amount of generated energy before crossing the exclusion zone.

According to a special embodiment, the rotational speed is changed from one of the first and second rotational speeds to the other of the first and second rotational speeds when the value of said at least one control parameter passes a predetermined threshold value.

The controller may in either one of the configurations described above monitor the control signal to detect when it passes an upper threshold value. Once the control signal passes the upper threshold value, the controller increases the value of the rotational speed control signal to a higher value, e.g. the second rotational speed. The controller optionally maintains one or more of the other control signals at their respective operating levels. Alternatively or additionally, the controller may send a control signal to the braking system which in turn releases the rotor so that it is able to pick up speed. The controller continues to monitor the rotational speed to detect when it passes the second rotational speed. Once the rotational speed passes the second rotational speed, the controller adjusts the rotational speed control signal and the other control signals back to their normal operating levels. As the wind speed continues to increase towards the cut-out wind speed, the wind turbine returns to the normal power production mode and the rotational speed follows the normal operating level of the upper zone. This allows the wind turbine to cross the respective exclusion zone using this accumulated excess energy.

Similarly, the controller may in either one of the configurations described above monitor the control signal to detect when it passes a lower threshold value. Once the control signal passes the lower threshold value, the controller decreases the value of the rotational speed control signal to a lower value, e.g. the first rotational speed. The controller optionally maintains one or more of the other control signals at their respective operating levels. Alternatively, or additionally, the controller may send a control signal to the braking system which in turn slows down the rotational speed of the rotor. The controller continues to monitor the rotational speed to detect when it passes the first rotational speed. Once the rotational speed passes the first rotational speed, the controller adjusts the rotational speed control signal and the other control signals back to their normal operating levels. As the wind speed continues to decrease towards the cut-in wind speed, the wind turbine returns to the normal power production mode and the rotational speed follows the normal operating level of the lower zone. This allows the wind turbine to cross the respective exclusion zone without accumulating too much excess energy.

According to one embodiment, the method further comprises the step of measuring at least a third parameter of the wind turbine and wherein the variable width is determined based on the vibration level of the measured vibration signal and the at least third parameter.

A wind speed, a wave speed or another third parameter may be measured, and this third signal may afterwards be processed in the controller. The third signal may be combined with the vibration level to determine the width of the exclusion zone. Alternatively, the third signal may be combined with the other control signal described above to determine when it is safe for the wind turbine to cross the exclusion zone.

According to a special embodiment, the at least one exclusion zone includes a first exclusion zone defined by the first and second rotational speeds and at least a second exclusion zone defined by a third rotational speed and at least a fourth rotational speed.

Conventional control only teaches the use of a single exclusion zone relating to the eigenfrequency of the wind turbine tower. The present invention enables the exclusion algorithm to comprise a plurality of exclusion zones each dedicated to a predetermined frequency. The exclusion algorithm may further comprise a plurality of transfer function used to determine the width of these exclusion zones.

In example, the first and second rotational speeds may define a first exclusion zone which is located around the critical rotational speed associated with the eigenfrequency of the wind turbine tower as described earlier. A third and a fourth rotational speed may define a second exclusion zone associated with the passing frequency of the wind turbine blades, e.g. the 2P-frequency or the 3P-frequency. The second exclusion zone may have a fixed width or a variable width as described earlier. Alternatively, a third exclusion zone associated with another critical frequency or rotational speed may be applied to the rotational speed range. This enables the resonance loads occurring at different frequencies to be reduced while minimising the power loss at low vibration levels.

The controller may apply a second transfer function to the measured vibration level to determine the width of the second exclusion zone. This second transfer function may have the same configuration as the transfer function of the first exclusion zone described earlier or a different configuration. In example, the second transfer function may also comprise a first line segment defining a transition phase in which the controller varies the second exclusion zone from a third width to a fourth width as the measured vibrations increase from a third vibration level or value to a fourth vibration level or value, and vice versa. At least another line segment may define another region in which the second exclusion zone is maintained at the third or fourth width as described earlier. The controller may adjust the operation of the wind turbine as described earlier to move the rotational speed out of the second exclusion zone and, thus, reduce the vibrational movements and fatigue loads.

The controller may optionally be configured to further analyse the frequency transformed vibration signal to detect the passing frequency of the wind turbine blades or to calculate this passing frequency based on one or more control parameters.

An object of the invention is also achieved by a wind turbine comprising a wind turbine tower, a nacelle arranged on top of the wind turbine tower, a rotatable rotor with at least two wind turbine blades arranged relative to the nacelle, and a wind turbine control system, wherein the wind turbine control system comprises a controller configured to control the operation of the wind turbine and a sensor unit configured to measure the rotational speed of the rotor, wherein the controller is further configured to adjust the operation of the wind turbine when the measured rotational speed is within at least one exclusion zone determined by a width about a predetermined rotational speed; whereby the at least one exclusion zone defines a first rotational speed and at least a second rotational speed so that the rotational speed of the rotor is changed to a rotational speed located outside the at least one exclusion zone, the wind turbine control system further comprises a second sensor unit configured to measure a vibration signal indicative of vibrations in the wind turbine tower, where the vibration signal is transformed into the frequency domain via a spectral analysis algorithm, preferably a Fast Fourier Transform algorithm , and where the controller is configured to determine a vibration level of the wind turbine based on the amplitude of the frequency transformed vibration signal, wherein the control system is configured to determine a variable width based on the measured vibration signal and to vary the at least one exclusion zone by the variable width about the predetermined rotational speed and the controller is configured to apply a transfer function to the vibration level of the measured vibration signal, wherein the transfer function is indicative of a transition phase in which the width is changed between a first width and a second width.

The control method described above is implemented in the controller of the wind turbine control system, e.g. as an exclusion algorithm. The controller is further connected to one or more vibration sensors arranged on one or more components of the wind turbine. Unlike conventional wind turbine control systems, the present wind turbine control system is capable of adapting the operation of the wind turbine to the different conditions causing vibrations in the wind turbine by varying the width of the respective exclusion zone. Preferably, the wind turbine control system is configured to adjust the operation of the wind turbine according to a first and at least a second exclusion zone as described earlier. The controller is configured to determine the width of one or more of these exclusion zones based on the vibration level measured by the vibration sensors unlike conventional wind turbine control systems which all teach the use of a single exclusion zone with a fixed width. This allows the wind turbine control system to change the rotational speed within the rotational speed range to avoid any critical rotational speeds that may cause resonance and, thus, increased vibrations in the wind turbine.

The vibration sensor may be an accelerometer, strain gauge, position sensor, velocity sensor or another suitable sensor. The vibration sensor may be arranged on the rotor hub, wind turbine blade, nacelle, gearbox unit, main bearing unit, generator or another suitable component of the wind turbine. Preferably, a first/lateral sensor is used to measure the vibrations in the lateral direction, and optionally a second/axial sensor is used to measure the vibrations in the axial direction. The rotational speed sensor may be an encoder, tachometer, stroboscope, or another suitable sensor. The rotational speed sensor may be arranged relative to the rotor or on a component of the drive train, e.g. the rotor shaft, rotation shaft or generator. The vibration sensor and rotational speed sensor may be electrically connected to the controller via a wired or wireless connection.

The wind turbine may be an onshore or offshore wind turbine configured to be mounted on a suitable onshore or offshore foundation. The wind turbine advantageously has one, two, three or more wind turbine blades mounted to the rotor hub. The present control method can also be implemented in existing wind turbine control system having a vibration sensor and a rotational speed sensor.

The controller is futher configured to apply a transfer function to the vibration signal, wherein the transfer function is indicative of a transition phase in which the width is changed between a first width and a second width.

The transfer function implemented in the controller defines at least one transition phase extending from a lower vibration level, i.e. first vibration value, to an upper vibration level, i.e. second vibration value. The controller is configured to vary the exclusion zone from the first width to the second width as the measured vibrations increase from the first vibration level to a second vibration level, and vice versa. Conventional controllers provide, to some extent, a smooth activation of the exclusion algorithm, whereas the present controller provides a more well-defined smooth activation of the exclusion algorithm while adapting the width of the exclusion zone based on the vibration level. The wind turbine is thus operated closer to the normal operating level at low vibration levels and thereby increasing the power production without requiring additional structural strength in the wind turbine tower.

The controller is configured to detect if the current vibration level is within a second region defined by the transfer function, e.g. below the lower vibration level. If so, the exclusion algorithm is not activated and, thus, the rotational speed is not changed during the power production mode. The controller is further configured to detect if the current vibration level is within a third region defined by the transfer function, e.g. above the upper vibration level. If so, the exclusion algorithm is fully activated, i.e. maximum width deployed, and thus the rotational speed is changed relative to the normal operating level to avoid rotational speeds located close to the critical rotation speed.

The first and second rotational speeds may be centred relative to the eigenfrequency of the wind turbine tower. This eigenfrequency of the wind turbine tower may, however, drift during the life time of the wind turbine due to aging, fatigue loads, etc. This may be solved by using the measured vibration signals to identify the current eigenfrequency of the wind turbine tower and store it in the wind turbine control system. Alternatively, the current eigenfrequency of the wind turbine tower may be calculated based on one or more predetermined control parameters. The wind turbine control system, e.g. the controller, may then determine the values of the first and second rotational speeds based on this updated frequency. Alternatively, this drift may be taken into account when determining the width of the exclusion zone. Similarly, the measured vibration level may be used to identify the passing frequency of the wind turbine blades or said passing frequency may be calculated based on one or more predetermined control parameters.

The controller may be configured to apply at least a second transfer function to the measured vibration level to determine the width of at least a second exclusion zone. The first and second exclusion zones may be overlapping exclusion zones or separate exclusion zones. The second transfer function may be a linear function, a stepped function, a S-function, an exponential function, or a logarithmic function.

According to a special embodiment, the wind turbine control system further comprises at least a third sensor unit configured to measure at least a third parameter, wherein the controller is configured to determine the width based on the vibration level of the measured vibration signal and the at least third parameter.

In the conventional wind turbine control systems, the fixed width is determined as a trade-off between the power loss and the fatigue loads in the wind turbine. Unlike conventional wind turbine control systems, the present controller is configured to determine the width of the respective exclusion zone based on the vibration level alone or in combination with other suitable parameters measured in or relative to the wind turbine. In example, the vibration level may be combined with the measured wind speed and/or wave speed.

According to one embodiment, the wind turbine further comprises at least one unit selected from a pitch mechanism configured to pitch at least a part of one of the wind turbine blades, a braking system configured to brake the rotor, and an electrical generator configured to generate an electrical power output, and wherein the controller is configured to change the rotational speed of the rotor by adjusting the operation of said at least one unit.

The controller is configured to change the rotational speed of the wind turbine by adjusting the rotational speed control signal and, optionally, the torque control signal, the pitch control signal, the power control signal or any combinations thereof. One or more optimisation modules connected to or integrated in the controller determine the optimal set-points of the control signals for the rotational speed, the generator torque, the pitch angle, and the power level. One or more of these optimised control signals may be transmitted to an exclusion module connected to or integrated in the controller. The exclusion module is configured to adjust these control signals relative to their normal operating level, e.g. their optimal set-points, as described above.

In each of the exclusion zones of the rotational speed, the control signals are adjusted by the exclusion module. The measured rotational speed and/or vibration level may be used as inputs for the exclusion module to determine the width of the respective exclusion zone and the adjusted value of the rotational speed control signal as described above. This prevents large vibrational movements and fatigue loads in the wind turbine due to resonance.

### Description of the Drawing

The invention is described by example only and with reference to the drawings, wherein:
- Fig. 1: shows an exemplary embodiment of a wind turbine,
- Fig. 2: shows a graph of an exemplary measured vibration signal in the frequency domain,
- Fig. 3: shows an exemplary embodiment of the transfer function applied to the measured vibration signal, and
- Fig. 4: shows a graph of exemplary unmodified torque control signal and three graphs of the torque control signal having different widths of the exclusion zone.

In the following text, the figures will be described one by one and the different parts and positions seen in the figures will be numbered with the same numbers in the different figures. Not all parts and positions indicated in a specific figure will necessarily be discussed together with that figure.

### Reference list

1. Wind turbine
2. Wind turbine tower
3. Nacelle
4. Wind turbine blades
5. Pitch mechanism
6. Tip end
7. Blade root
8. Trailing edge
9. Leading edge
10. Controller
11. Sensor units
12. Braking mechanism
13. Vibration signal
14. Eigenfrequency of the wind turbine tower
15. Passing frequency of the wind turbine blades
16. Transfer function
17. Torque control signal, normal operating level
18. First exclusion zone
19. Second exclusion zone
20. Torque control signals, changed

### Detailed Description of the Invention

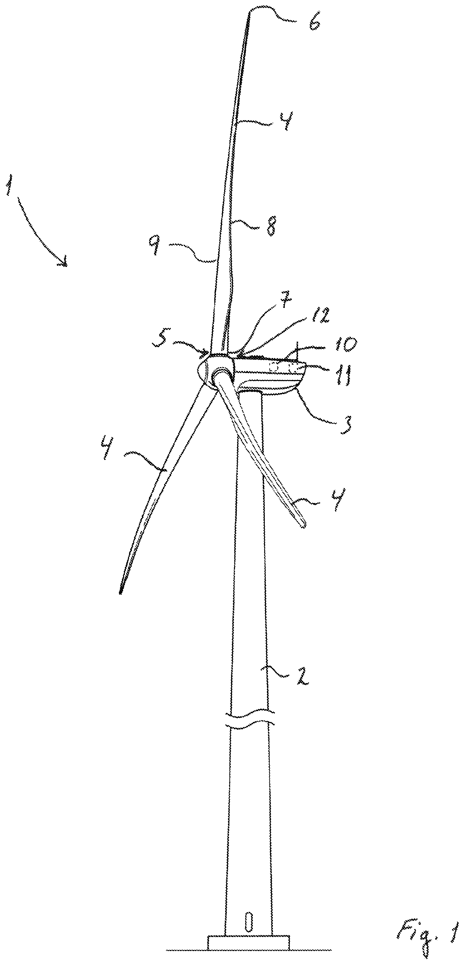

Fig. 1 shows an exemplary embodiment of a wind turbine 1 comprising a wind turbine tower 2. A nacelle 3 is arranged on top of the wind turbine tower 2 and connected to the wind turbine tower 2 via a yaw mechanism (not shown). A rotor comprising at least two wind turbine blades 4, here three blades are shown, is rotatably connected to a hub which is further connected to a drive train arranged inside the nacelle 3 via a rotation shaft. Each wind turbine blade 4 is rotatably connected to a hub via a pitch mechanism 5 controlled by a pitch controller in the wind turbine control system. Each wind turbine blade 4 has a tip end 6, a blade root 7 and a body having an aerodynamic profile which defines a trailing edge 8 and a leading edge 9.

The wind turbine control system further comprises a controller 10, which controls the operation of the wind turbine 1, and a plurality of sensor units 11 connected to the controller 10. Said sensor units 11 comprise a rotational speed sensor configured to measure the rotational speed of the rotor and a vibration sensor configured to measure the vibrations of the wind turbine 1. Said sensor units 11 further comprise at least a third sensor for measuring at least a third parameter on or relative to the wind turbine 1. In example, said third sensor may be a wind speed sensor configured to measure the wind speed of the wind.

A braking system is optionally arranged relative to the rotor or the rotation shaft and comprises a braking mechanism 12 configured to brake the rotational speed of the rotor and, thus, the wind turbine blades 4. The braking system is connected to the wind turbine control system, wherein the controller 10 controls the operation of the braking system.

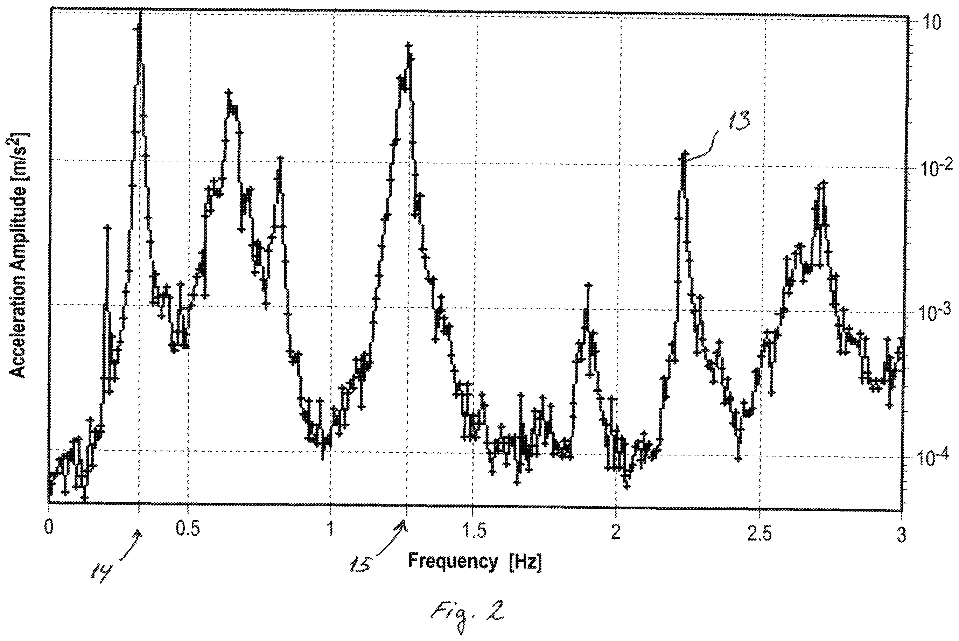

Fig. 2 shows a graph of an exemplary vibration signal 13 measured by the vibration sensor. The vibration signal is transferred into the frequency domain using a spectral analysis algorithm, e.g. a FFT algorithm. The controller 10 then determines the vibration level based on the amplitude of the frequency transformed vibration signal 13.

The controller 10 monitors the vibration level to determine the width of the exclusion zone located around the eigenfrequency 14 of the wind turbine tower 2. Optionally, the controller 10 further monitors the vibration level to determine the width of another exclusion zone located around the passing frequency 15 of the wind turbine blades 4. Each of these exclusion zones defines a critical rotational speed which is in turn used by the controller 10 to change the operation of the wind turbine 1 so that the rotor is rotating at the rotational speed located outside that exclusion zone.

The controller 10 optionally analyses the frequency transformed vibration signal 13 and determines the eigenfrequency 14 of wind turbine tower 2 and/or the passing frequency 15 of the wind turbine blades 4, e.g. by using any known algorithms.

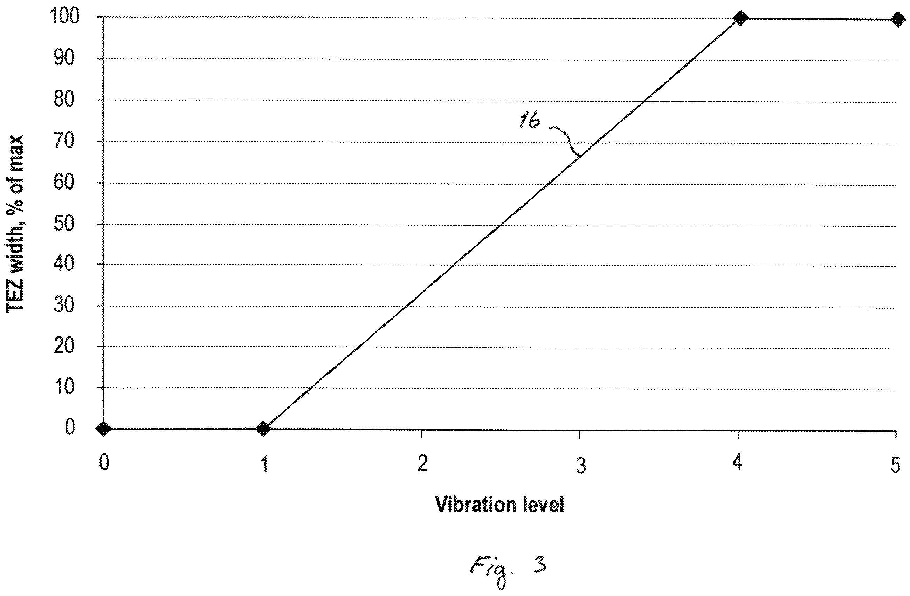

Fig. 3 shows a graph of an exemplary transfer function 16 applied to the measured vibration level. The transfer function 16 is applied to the vibration level determined by the controller 10 and is used to determine the width of the respective exclusion zone. This enables the width to be varied according to the output of the transfer function 16.

A first and a second vibration level define a first line segment of the transfer function 16. This line segment defines a transition phase in which the width of the exclusion zone is changed from a first width to a second width. In example, the first line segment may be a linear function as shown in fig. 3. A second line segment is defined by a first width or a minimum value, e.g. zero, of the width. A third line segment is defined by a second width or a maximum value of the width.

As shown in fig. 3, the width may be varied between 0 % and 100 % of the maximum value within this transition region. The transition region may extend from a lower vibration level of 'one' to an upper vibration level of 'four'. These values are pre-set during the implementation process of this described method and optionally updated, i.e. changed, when needed.

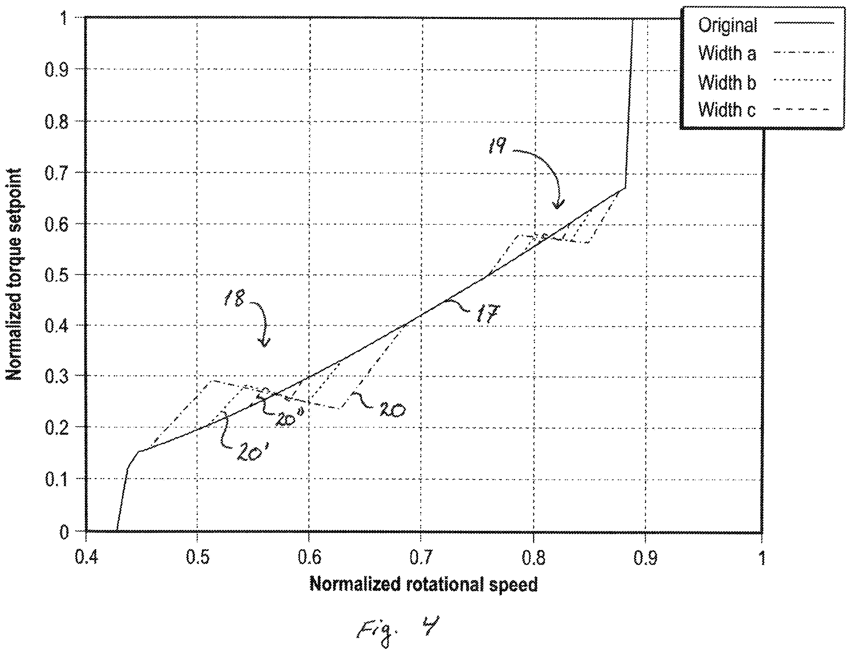

Fig. 4 shows an exemplary control signal as function of the rotational speed of the rotor of the wind turbine 1. Here, the control parameter is a torque control signal. The torque control signal and the rotational speed are here normalised by using any known normalisation algorithm for illustrative purposes.

A first graph 17 shows the torque control signal determined by the controller 10 according to a normal operating level. The controller 10 determines the optimal set-point of the control signals based on the measurements from the sensor units 11. A first exclusion zone 18 and optionally a second exclusion zone 19 are applied to the rotational speed as illustrated in fig. 4. At least the torque control signal is then transmitted to the controller 10 which determines the width of the first exclusion zone 18 using the output of the transfer function 16. Similarly, the controller 10 determines the width of the second exclusion zone 19 using the output of another transfer function 16. In this normal operating level, the measured vibration level is below the lower vibration level and thus the exclusion algorithm is not activated.

A second graph 20 shows the torque control signal after the exclusion algorithm is fully activated. In this operating level, the vibration level is above the upper vibration level, and thus the width of the first and/or second exclusion zones 18, 19 has a maximum value. When the exclusion algorithm is activated, the controller 10 adjusts the operation of the wind turbine 1 so that the rotational speed of the rotor is changed to another rotational speed situated outside the respective exclusion zone(s). In example, the controller 10 changes the set-point of the torque control signal relative to the normal operating level as indicated in fig. 4.

A third and a fourth graph 20', 20" shows the changed torque control signal when the measured vibration level is between the lower and upper vibration levels. In this operating level, the exclusion algorithm is partly activated, and thus the width of the first exclusion zone 18 is between the first and second widths and/or the width of the second exclusion zone 19 is between a third width and a fourth width. As the rotational speed is increased, the vibration level is initially increased past the lower vibration level. This activates the exclusion algorithm and the width of the first exclusion zone 18 is gradually varied from the first width towards the second width as indicated by graph 20". As the vibration level continues to increase, the width of the first exclusion zone 18 is continuously varied as indicated by graph 20' until it reaches the second width as indicated by graph 20. Even if the vibration level continues to increase, the first exclusion zone 18 is maintained at the second width. Once the vibration level is reduced towards zero, the width of the first exclusion zone 18 is varied in a reversed order back towards the first width.

As the rotational speed is moved out of the first exclusion zone 18 and continues to increase, the rotational speed is moved into the second exclusion zone 19. The width of the second exclusion zone 19 is varied in a similar manner between the third and fourth widths according to the changing vibration level. The rotational speed is then moved out of the second exclusion zone 19 and towards the maximum rotational speed. When the rotational speed drops towards the minimum rotational speed, it is moved through the second and first exclusion zones 19, 18 respectively.

This minimises the power loss at the critical rotational speeds at high vibration levels while allowing the wind turbine to operate at the normal operating level at all time at low vibration levels.

Prior to the rotational speed reaching the exclusion zone 18, 19, the controller 10 adjusts the set-point of at least one of the control signals, e.g. the torque control signal, as indicated in fig. 4 to enable a quick change of rotational speed from the first or third rotational speed to the second or fourth rotational speed, or vice versa. This reduces the time spend at the critical rotational speed and, thus, reduces the resonance loads.

## Claims

1. A method of controlling a wind turbine (1) for reducing fatigue loads, the wind turbine (1) comprising a wind turbine tower (2), a nacelle (3) arranged on top of the wind turbine tower (2), a rotatable rotor with at least two wind turbine blades (4) arranged relative to the nacelle (3), and a wind turbine control system, wherein the wind turbine control system comprises a controller (10) configured to control the operation of the wind turbine (1) and a sensor unit (11) configured to measure the rotational speed of the rotor, wherein the method comprises the steps of:
- measuring a vibration signal (13) indicative of vibrations in the wind turbine tower (2), transforming the vibration signal (13) into the frequency domain via a spectral analysis algorithm, preferably a Fast Fourier Transform algorithm;
- measuring a rotational speed of the wind turbine (1);
- determining a vibration level of the wind turbine (1) based on the amplitude of the frequency transformed vibration signal (13);and
- comparing the measured rotational speed to at least one exclusion zone (18, 19) determined by a width about a predetermined rotational speed, whereby the at least one exclusion zone defines a first rotational speed and at least a second rotational speed, and when the measured rotational speed is within the at least one exclusion zone (18, 19) performing a step of:
- adjusting the operation of the wind turbine (1) so that the rotational speed is changed to a rotational speed located outside the at least one exclusion zone (18, 19), **characterised in that** the method further comprises steps of:
- varying the width of the at least one exclusion zone (18, 19) as a variable width as a function of the measured vibration signal (13), and
- applying a transfer function (16) to the vibration level of the measured vibration signal (13), wherein the transfer function (16) is indicative of at least one transition phase in which the variable width is changed between a first width and a second width.

2. The method according to claim 1, **characterised in that** the transfer function (16) is at least a linear function, a stepped function, an S-function, an exponential function, or a logarithmic function.

3. The method according to any one of claims 1 to 2, **characterised in that** the variable width is variable to or from the value of zero for the at least one exclusion zone (18, 19) about a predetermined rotational speed corresponding to a predetermined frequency.

4. The method according to any one of claims 1 to 3, **characterised in that** the step of adjusting the operation of the wind turbine (1) comprises changing a value of at least one control signal, e.g. a torque control signal changed (20), relative to a normal operating level, e.g. a torque control signal normal (17), the step of adjusting being performed to maintain the rotational speed at the first or second rotational speed.

5. The method according to any of claims 1 to 3, **characterised in that** the step of adjusting the operation of the wind turbine (1) comprises changing the value of at least one control signal, e.g. a torque control signal (17), relative to a normal operating level, the step of adjusting being performed when the measured rotational speed is between a third rotational speed and the first or second rotational speed.

6. The method according to claim 4 or 5, **characterised in that** the rotational speed is changed from one of the first and second rotational speeds to the other of the first and second rotational speeds when the value of at least one control parameter passes a predetermined threshold value.

7. The method according to any of claims 1 to 6, **characterised in that** the method further comprises a step of measuring at least a third parameter of the wind turbine (1), and wherein the variable width is determined based on the vibration level of the measured vibration signal (13) and the at least third parameter.

8. The method according to any of claims 1 to 7, **characterised in that** the at least one exclusion zone (18, 19) includes a first exclusion zone (18) determined by a first width about a first predetermined rotational speed corresponding to a predetermined tower eigenfrequency (14); whereby the first exclusion zone (18) defines a first and second rotational speeds and at least a second exclusion zone (19) determined by a second width about a second predetermined rotational speed corresponding to a predetermined blade passing frequency (15); whereby the second exclusion zone (19) defines a third rotational speed and at least a fourth rotational speed.

9. A wind turbine (1) comprising a wind turbine tower (2), a nacelle (3) arranged on top of the wind turbine tower (2), a rotatable rotor with at least two wind turbine blades (4) arranged relative to the nacelle (3), and a wind turbine control system, wherein the wind turbine control system comprises a controller (10) configured to control the operation of the wind turbine (1) and a sensor unit (11) configured to measure the rotational speed of the rotor, wherein the controller (10) is further configured to adjust the operation of the wind turbine (1) when the measured rotational speed is within at least one exclusion zone (18, 19) determined by a width about a predetermined rotational speed; whereby the at least one exclusion zone (18, 19) defines a first rotational speed and at least a second rotational speed, so that the rotational speed of the rotor is changed to a rotational speed located outside the at least one exclusion zone (18, 19), the wind turbine control system further comprises a second sensor unit configured to measure a vibration signal (13) indicative of vibrations in the wind turbine tower (2), where the vibration signal (13) is transformed into the frequency domain via a spectral analysis algorithm, preferably a Fast Fourier Transform algorithm, and where the controller is configured to determine a vibration level of the wind turbine (1) based on the amplitude of the frequency transformed vibration signal (13), **characterised in that** the control system is configured to determine a variable width based on the measured vibration signal (13) and to vary the at least one exclusion zone (18, 19) by the variable width about the predetermined rotational speed, and the controller (10) is configured to apply a transfer function (16) to the vibration level of the measured vibration signal (13), wherein the transfer function (16) is indicative of a transition phase in which the width is changed between a first width and a second width.

10. The wind turbine (1) according to claim 9, **characterised in that** the control system is configured to allow that the variable width is variable to or from the value of zero for the at least one exclusion zone (18, 19) about a predetermined rotational speed corresponding to a predetermined frequency.

11. The wind turbine (1) according to any of claims 9 to 10, **characterised in that** the wind turbine control system further comprises at least a third sensor unit configured to measure at least a third parameter, wherein the controller (10) is configured to determine the width based on the vibration level of the measured vibration signal (13) and the at least third parameter.

12. The wind turbine (1) according to any of claims 9 to 11, **characterised in that** the wind turbine control system is configured, so that the at least one exclusion zone (18, 19) includes a first exclusion zone (18) determined by a first width about a first predetermined rotational speed corresponding to a predetermined tower eigenfrequency (14); whereby the first exclusion zone (18) defines a first and a second rotational speeds and at least a second exclusion zone (19) determined by a second width about a predetermined rotational speed corresponding to a predetermined blade passing frequency (15); whereby the second exclusion zone (19) defines a third rotational speed and at least a fourth rotational speed.

13. The wind turbine (1) according to any one of claims 9 to 12, **characterised in that** the wind turbine (1) further comprises at least one unit selected from a pitch mechanism (5) configured to pitch at least a part of one of the wind turbine blades (4), a braking system (12) configured to brake the rotor, and an electrical generator configured to generate an electrical power output, and wherein the controller (10) is configured to change the rotational speed of the rotor by adjusting the operation of said at least one unit.

## Patentansprüche

1. Verfahren zum Steuern einer Windturbine (1) zum Reduzieren von Ermüdungsbeanspruchungen, wobei die Windturbine (1) einen Windturbinenturm (2), eine Gondel (3), welche am oberen Ende des Windturbinenturms (2) angeordnet ist, einen drehbaren Rotor mit mindestens zwei Windturbinenschaufeln (4), welche bezogen auf die Gondel (3) angeordnet sind, und ein Windturbinensteuersystem umfasst, wobei das Windturbinensteuersystem eine Steuerung (10), welche dazu konfiguriert ist, den Betrieb der Windturbine (1) zu steuern, und eine Sensoreinheit (11) umfasst, welche dazu konfiguriert ist, die Drehzahl des Rotors zu messen, wobei das Verfahren die folgenden Schritte umfasst:
- Messen eines Vibrationssignals (13), welches Signal Vibrationen in dem Windturbinenturm (2) anzeigt, wobei das Vibrationssignal (13) mittels eines spektralen Analysenalgorithmus, vorzugsweise eines Fast-Fourier-Transformationsalgorithmus, in den Frequenzbereich transformiert wird;
- Messen einer Drehzahl der Windturbine (1);
- Bestimmen eines Vibrationsniveaus der Windturbine (1) basierend auf der Amplitude des frequenztransformiertes Vibrationssignals (13); und
- Vergleichen der gemessenen Drehzahl mit mindestens einem Ausschlussbereich (18, 19), welcher durch eine Breite um eine vorbestimmte Drehzahl bestimmt ist, wobei der mindestens eine Ausschlussbereich eine erste Drehzahl und mindestens eine zweite Drehzahl definiert, und Durchführen eines folgenden Schritts, wenn die gemessene Drehzahl innerhalb des mindestens einen Ausschlussbereichs (18, 19) liegt:
- Anpassen des Betriebs der Windturbine (1), sodass die Drehzahl auf eine Drehzahl geändert wird, welche sich außerhalb des mindestens einen Ausschlussbereichs (18, 19) befindet, **dadurch gekennzeichnet, dass** das Verfahren ferner die folgenden Schritte umfasst:
- Variieren der Breite des mindestens einen Ausschlussbereichs (18, 19) als eine variable Breite als eine Funktion des gemessenen Vibrationssignals (13), und
- Anwenden einer Übertragungsfunktion (16) auf das Vibrationsniveau des gemessenen Vibrationssignals (13), wobei die Übertragungsfunktion (16) mindestens eine Übergangsphase anzeigt, in welcher die variable Breite zwischen einer ersten Breite und einer zweiten Breite geändert wird.

2. Verfahren nach Anspruch 1, **dadurch gekennzeichnet, dass** die Übertragungsfunktion (16) mindestens eine lineare Funktion, eine gestufte Funktion, eine S-Funktion, eine Exponentialfunktion oder eine logarithmische Funktion ist.

3. Verfahren nach einem der Ansprüche 1 bis 2, **dadurch gekennzeichnet, dass** die variable Breite variabel zu oder von dem Wert Null ist für den mindestens einen Ausschlussbereich (18, 19) um eine vorbestimmte Drehzahl, welche einer vorbestimmten Frequenz entspricht.

4. Verfahren nach einem der Ansprüche 1 bis 3, **dadurch gekennzeichnet, dass** der Schritt des Anpassens des Betriebs der Windturbine (1) ein Ändern eines Werts des mindestens einen Steuersignals, z. B. einem geänderten Drehmomentsteuersignal (20), bezogen auf ein normales Betriebsniveau umfasst, z. B. ein normales Drehmomentsteuersignal (17), wobei der Schritt des Anpassens durchgeführt wird, um die Drehzahl bei der ersten oder zweiten Drehzahl durchzuführen.

5. Verfahren nach einem der Ansprüche 1 bis 3, **dadurch gekennzeichnet, dass** der Schritt des Anpassens des Betriebs der Windturbine (1) ein Ändern des Werts des mindestens einen Steuersignals, z. B. eines Drehmomentsteuersignals (17), bezogen auf ein normales Betriebsniveau umfasst, wobei der Schritt des Anpassens durchgeführt wird, wenn die gemessene Drehzahl zwischen einer dritten Drehzahl und der ersten oder zweiten Drehzahl liegt.

6. Verfahren nach Anspruch 4 oder 5, **dadurch gekennzeichnet, dass** die Drehzahl von einer von der ersten und zweiten Drehzahl geändert wird zu der anderen von der ersten und zweiten Drehzahl, wenn der Wert von mindestens einem Steuerparameter einen vorbestimmten Schwellenwert passiert.

7. Verfahren nach einem der Ansprüche 1 bis 6, **dadurch gekennzeichnet, dass** das Verfahren ferner einen Schritt des Messens von mindestens einem dritten Parameter der Windturbine (1) umfasst, und wobei die variable Breite bestimmt wird basierend auf dem Vibrationsniveau des gemessenen Vibrationssignals (13) und dem mindestens dritten Parameter.

8. Verfahren nach einem der Ansprüche 1 bis 7, **dadurch gekennzeichnet, dass** der mindestens eine Ausschlussbereich (18, 19) einen ersten Ausschlussbereich (18) beinhaltet, welcher durch eine erste Breite um eine erste vorbestimmte Drehzahl bestimmt wird, welche einer vorbestimmten Turmeigenfrequenz (14) entspricht; wobei der erste Ausschlussbereich (18) eine erste und zweite Drehzahl und mindestens einen zweiten Ausschlussbereich (19) definiert, welcher durch eine zweite Breite um eine zweite vorbestimmte Drehzahl bestimmt wird, welche einer vorbestimmten Schaufelpassierfrequenz (15) entspricht; wobei der zweite Ausschlussbereich (19) eine dritte Drehzahl und mindestens eine vierte Drehzahl definiert.

9. Windturbine (1), umfassend einen Windturbinenturm (2), eine Gondel (3), welche am oberen Ende des Windturbinenturms (2) angeordnet ist, einen drehbaren Rotor mit mindestens zwei Windturbinenschaufeln (4), welche bezogen auf die Gondel (3) angeordnet sind, und ein Windturbinensteuersystem, wobei das Windturbinensteuersystem eine Steuerung (10), welche dazu konfiguriert ist, den Betrieb der Windturbine (1) zu steuern, und eine Sensoreinheit (11) umfasst, welche dazu konfiguriert ist, die Drehzahl des Rotors zu messen, wobei die Steuerung (10) ferner dazu konfiguriert ist, den Betrieb der Windturbine (1) anzupassen, wenn die gemessene Drehzahl innerhalb mindestens eines Ausschlussbereichs (18, 19) liegt, welcher durch eine Breite um eine vorbestimmte Drehzahl definiert ist; wobei der mindestens eine Ausschlussbereich (18, 19) eine erste Drehzahl und mindestens eine zweite Drehzahl definiert, sodass die Drehzahl des Rotors auf eine Drehzahl geändert wird, welche sich außerhalb des mindestens einen Ausschlussbereichs (18, 19) befindet, wobei das Windturbinensteuersystem ferner eine zweite Sensoreinheit umfasst, welche dazu konfiguriert ist, ein Vibrationssignal (13) zu messen, welches Vibrationen in dem Windturbinenturm (2) angibt, wobei das Vibrationssignal (13) mittels eines spektralen Analysenalgorithmus, vorzugsweise eines Fast-Fourier-Transformationsalgorithmus, in den Frequenzbereich transformiert wird, und wobei die Steuerung dazu konfiguriert ist, basierend auf der Amplitude des frequenztransformiertes Vibrationssignals (13) ein Vibrationsniveau der Windturbine (1) zu bestimmen, **dadurch gekennzeichnet, dass** das Steuersystem dazu konfiguriert ist, eine variable Breite basierend auf dem gemessenen Vibrationssignal (13) zu bestimmen und den mindestens einen Ausschlussbereich (18, 19) durch die variable Breite um die vorbestimmte Drehzahl zu variieren, und wobei die Steuerung (10) dazu konfiguriert ist, eine Übertragungsfunktion (16) auf dem Vibrationsniveau des gemessenen Vibrationssignals (13) anzuwenden, wobei die Übertragungsfunktion (16) eine Übergangsphase anzeigt, in welcher die variable Breite zwischen einer ersten Breite und einer zweiten Breite geändert wird.

10. Windturbine (1) nach Anspruch 9, **dadurch gekennzeichnet, dass** das Steuersystem dazu konfiguriert ist, zu erlauben, dass die variable Breite variabel zu oder von dem Wert Null für den mindestens einen Ausschlussbereich (18, 19) um eine vorbestimmte Drehzahl ist, welche einer vorbestimmten Frequenz entspricht.

11. Windturbine (1) nach einem der Ansprüche 9 bis 10, **dadurch gekennzeichnet, dass** das Windturbinensteuersystem ferner mindestens eine dritte Sensoreinheit umfasst, welche dazu konfiguriert ist, mindestens einen dritten Parameter zu messen, wobei die Steuerung (10) dazu konfiguriert ist, die Breite basierend auf dem Vibrationsniveau des gemessenen Vibrationssignals (13) und dem mindestens dritten Parameter zu bestimmen.

12. Windturbine (1) nach einem der Ansprüche 9 bis 11, **dadurch gekennzeichnet, dass** das Windturbinensteuersystem so konfiguriert ist, dass der mindestens eine Ausschlussbereich (18, 19) einen ersten Ausschlussbereich (18) beinhaltet, welcher durch eine erste Breite um eine erste vorbestimmte Drehzahl bestimmt ist, welche einer vorbestimmten Turmeigenfrequenz (14) entspricht; wobei der erste Ausschlussbereich (18) eine erste und eine zweite Drehzahl und mindestens einen zweiten Ausschlussbereich (19) definiert, welcher durch eine zweite Breite um eine vorbestimmte Drehzahl bestimmt ist, welche einer vorbestimmten Schaufelpassierfrequenz (15) entspricht; wobei der zweite Ausschlussbereich (19) eine dritte Drehzahl und mindestens eine vierte Drehzahl definiert.

13. Windturbine (1) nach einem der Ansprüche 9 bis 12, **gekennzeichnet dadurch, dass** die Windturbine (1) ferner mindestens eine Einheit, welche von einem Pitch-Mechanismus (5) ausgewählt ist, welcher dazu konfiguriert ist, mindestens einen Teil von einer der Windturbinenschaufeln (4) zu pitchen, ein Bremssystem (12), welches dazu konfiguriert ist, den Rotor zu bremsen, und einen elektrischen Generator umfasst, welcher dazu konfiguriert ist, eine elektrische Leistungsabgabe zu generieren, und wobei die Steuerung (10) dazu konfiguriert ist, die Drehzahl des Rotors durch ein Anpassen des Betriebs der mindestens einen Einheit zu ändern.

## Revendications

1. Procédé de commande d'une éolienne (1) permettant de réduire des charges de fatigue, l'éolienne (1) comprenant une tour d'éolienne (2), une nacelle (3) agencée au sommet de la tour d'éolienne (2), un rotor rotatif doté d'au moins deux pales d'éolienne (4) agencé par rapport à la nacelle (3), et un système de commande d'éolienne, dans lequel le système de commande d'éolienne comprend un dispositif de commande (10) configuré pour commander le fonctionnement de l'éolienne (1) et une unité de capteur (11) configurée pour mesurer la vitesse de rotation du rotor, dans lequel le procédé comprend les étapes consistant à :
- mesurer un signal de vibration (13) indiquant des vibrations dans la tour d'éolienne (2)transformant le signal de vibration (13) dans le domaine de fréquence via un algorithme d'analyse spectral, de préférence un algorithme de transformation de Fourier rapide ;
- mesurer une vitesse de rotation de l'éolienne (1) ;
- déterminer un niveau de vibration de l'éolienne (1) basé sur l'amplitude du signal de vibration (13) transformé en fréquence et
- comparer la vitesse de rotation mesurée à au moins une zone exclusion (18, 19) déterminée par une largeur autour d'une vitesse de rotation prédéterminée, moyennant quoi l'au moins une zone d'exclusion définit une première vitesse de rotation et au moins une deuxième vitesse de rotation, et lorsque la vitesse de rotation mesurée est à l'intérieur de l'au moins une zone d'exclusion (18, 19), réaliser une étape consistant à :
- régler le fonctionnement de l'éolienne (1) de sorte que la vitesse de rotation soit modifiée vers une vitesse de rotation située à l'extérieur de l'au moins une zone d'exclusion (18, 19), **caractérisé en ce que** le procédé comprend en outre les étapes consistant à :
- faire varier la largeur de l'au moins une zone d'exclusion (18, 19) en tant que largeur variable en fonction du signal de vibration mesuré (13), et
- appliquer une fonction de transfert (16) au niveau de vibration du signal de vibration mesuré (13), dans lequel la fonction de transfert (16) indique au moins une phase de transition dans laquelle la largeur variable est modifiée entre une première largeur et une deuxième largeur.

2. Procédé selon la revendication 1, **caractérisé en ce que** la fonction de transfert (16) est au moins une fonction linéaire, une fonction étagée, une fonction sigmoïde, une fonction exponentielle ou une fonction logarithmique.

3. Procédé selon l'une quelconque des revendications 1 à 2, **caractérisé en ce que** la largeur variable est variable vers ou depuis la valeur nulle pour l'au moins une zone d'exclusion (18, 19) autour d'une vitesse de rotation prédéterminée correspondant à une fréquence prédéterminée.

4. Procédé selon l'une quelconque des revendications 1 à 3, **caractérisé en ce que** l'étape de réglage du fonctionnement de l'éolienne (1) comprend la modification d'une valeur d'au moins un signal de commande, par exemple un signal de commande de couple modifié (20), par rapport à un niveau de fonctionnement normal, par exemple un signal de commande de couple normal (17), l'étape de réglage étant réalisée pour maintenir la vitesse de rotation au niveau de la première ou de la deuxième vitesse de rotation.

5. Procédé selon l'une quelconque des revendications 1 à 3, **caractérisé en ce que** l'étape de réglage du fonctionnement de l'éolienne (1) comprend la modification de la valeur d'au moins un signal de commande, par exemple un signal de commande de couple (17), par rapport à un niveau de fonctionnement normal, l'étape de réglage étant réalisée lorsque la vitesse de rotation mesurée se situe entre une troisième vitesse de rotation et la première ou la deuxième vitesse de rotation.

6. Procédé selon la revendication 4 ou 5, **caractérisé en ce que** la vitesse de rotation est modifiée depuis l'une parmi les première et deuxième vitesses de rotation vers l'autre parmi les première et deuxième vitesses de rotation lorsque la valeur d'au moins un paramètre de commande dépasse une valeur de seuil prédéterminée.

7. Procédé selon l'une quelconque des revendications 1 à 6, **caractérisé en ce que** le procédé comprend en outre une étape consistant à mesurer au moins un troisième paramètre de l'éolienne (1), et dans lequel la largeur variable est déterminée en fonction du niveau de vibration du signal de vibration mesuré (13) et de l'au moins troisième paramètre.

8. Procédé selon l'une quelconque des revendications 1 à 7, **caractérisé en ce que** l'au moins une zone d'exclusion (18, 19) comprend une première zone d'exclusion (18) déterminée par une première largeur autour d'une première vitesse de rotation prédéterminée correspondant à une première fréquence propre prédéterminée (14) ; moyennant quoi la première zone d'exclusion (18) définit une première et une deuxième vitesse de rotation et au moins une deuxième zone d'exclusion (19) déterminée par une deuxième largeur autour d'une deuxième vitesse de rotation prédéterminée correspondant à une première fréquence de passage de pale (15) ; moyennant quoi la deuxième zone d'exclusion (19) définit une troisième vitesse de rotation et au moins une quatrième vitesse de rotation.

9. Éolienne (1) comprenant une tour d'éolienne (2), une nacelle (3) agencée au sommet de la tour d'éolienne (2), un rotor rotatif doté d'au moins deux pales d'éolienne (4) agencé par rapport à la nacelle (3), et un système de commande d'éolienne, dans laquelle le système de commande d'éolienne comprend un dispositif de commande (10) configuré pour commander le fonctionnement de l'éolienne (1) et une unité de capteur (11) configurée pour mesurer la vitesse de rotation du rotor, dans laquelle le dispositif de commande (10) est configuré en outre pour régler le fonctionnement de l'éolienne (1) lorsque la vitesse de rotation mesurée est à l'intérieur d'au moins une zone d'exclusion (18, 19) déterminée par une largeur autour d'une vitesse de rotation prédéterminée ; moyennant quoi l'au moins une zone d'exclusion (18, 19) définit une première vitesse de rotation et au moins une deuxième vitesse de rotation, de sorte que la vitesse de rotation du rotor soit modifiée vers une vitesse de rotation située à l'extérieur de l'au moins une zone d'exclusion (18, 19), le système de commande d'éolienne comprend en outre une deuxième unité de capteur configurée pour mesurer un signal de vibration (13) indiquant des vibrations dans la tour d'éolienne (2), dans laquelle le signal de vibration (13) est transformé dans le domaine de fréquence via un algorithme d'analyse spectral, de préférence un algorithme de transformation de Fourier rapide, et où le dispositif de commande (10) est configuré pour déterminer un niveau de vibration de l'éolienne (1) basé sur l'amplitude du signal de vibration (13) transformé en fréquence, **caractérisée en ce que** le système de commande est configuré pour déterminer une largeur variable en fonction du signal de vibration (13) mesuré et pour faire varier l'au moins une zone d'exclusion (18, 19) selon la largeur variable autour de la vitesse de rotation prédéterminée, et le dispositif de commande (10) est configuré pour appliquer une fonction de transfert (16) au niveau de vibration du signal de vibration mesuré (13), dans laquelle la fonction de transfert (16) indique une phase de transition dans laquelle la largeur est modifiée entre une première largeur et une deuxième largeur.

10. Éolienne (1) selon la revendication 9, **caractérisée en ce que** le système de commande est configuré pour permettre à la largeur variable d'être variable vers ou depuis la valeur nulle pour l'au moins une zone d'exclusion (18, 19) autour d'une vitesse de rotation prédéterminée correspondant à une fréquence prédéterminée.

11. Éolienne (1) selon l'une quelconque des revendications 9 à 10, **caractérisée en ce que** le système de commande d'éolienne comprend au moins une troisième unité de capteur configurée pour mesurer au moins un troisième paramètre, dans laquelle le dispositif de commande (10) est configuré pour déterminer la largeur en fonction du niveau de vibration du signal de vibration mesuré (13) et de l'au moins troisième paramètre.

12. Éolienne (1) selon l'une quelconque des revendications 9 à 11, **caractérisée en ce que** le système de commande d'éolienne est configuré, de sorte que l'au moins une zone d'exclusion (18, 19) comprenne une première zone d'exclusion (18) déterminée par une première largeur autour d'une première vitesse de rotation prédéterminée correspondant à une première fréquence propre prédéterminée (14) ; moyennant quoi la première zone d'exclusion (18) définit une première et une deuxième vitesse de rotation et au moins une deuxième zone d'exclusion (19) déterminée par une deuxième largeur autour d'une vitesse de rotation prédéterminée correspondant à une première fréquence de passage de pale (15) ; moyennant quoi la deuxième zone d'exclusion (19) définit une troisième vitesse de rotation et au moins une quatrième vitesse de rotation.

13. Éolienne (1) selon l'une quelconque des revendications 9 à 12, **caractérisée en ce que** l'éolienne (1) comprend en outre au moins une unité sélectionnée parmi un mécanisme de contrôle de pas (5) configuré pour contrôler le pas d'au moins une partie de l'une des pales d'éolienne (4), un système de freinage (12) configuré pour freiner le rotor, et un générateur électrique configuré pour générer une sortie d'énergie électrique, et dans laquelle le dispositif de commande (10) est configuré pour modifier la vitesse de rotation du rotor par le réglage du fonctionnement de ladite au moins une unité.
